# EUROPÄISCHE PATENTSCHRIFT

(11) **EP 0 629 890 B1**
(45) Veröffentlichungstag und Bekanntmachung des Hinweises auf die Patenterteilung: **27.08.1997**
(21) Anmeldenummer: 94108791.8
(22) Anmeldetag: 08.06.1994
(51) Int. Cl.: G02B 23/12, G02B 26/10

(54) **Optronisches Rundumsuchgerät**
Optronic panoramic search device
Appareil optronique de recherche panoramique

(30) Priorität: 12.06.1993 DE 4319537
(43) Veröffentlichungstag der Anmeldung: 21.12.1994
(73) Patentinhaber: Bodenseewerk Gerätetechnik GmbH, 88662 Überlingen (DE)
(72) Erfinder: Uwira, Bernd, Dr., D-78464 Konstanz (DE)
(74) Vertreter: Weisse, Jürgen, Dipl.-Phys. Patentanwalt

(56) Entgegenhaltungen:
- EP-A- 0 402 601
- EP-A- 0 533 036
- DE-A- 3 212 729
- GB-A- 2 196 441

## Beschreibung

Die Erfindung betrifft ein optronisches Suchgerät enthaltend einen ersten Sucher für die Zieldetektion, durch welchen ein größeres, erstes Gesichtsfeld kontinuierlich abtastbar ist, einen zweiten Sucher zur Abtastung eines gegenüber dem ersten Gesichtsfeld begrenzten zweiten Gesichtsfeld zur Zielerkennung und einen hochauflösenden Sensor.

Insbesondere betrifft die Erfindung ein Rundumsuchgerät.

Rundumsuchgeräte werden insbesondere als Warnsensoren angewandt. Das Rundumsuchgerät sucht einen vorgegebenen, ausgedehnten Raumwinkel nach Objekten ab und liefert bei Detektion bestimmter Objekte ein Warnsignal.

An solche Rundumsuchgeräte werden Anforderungen gestellt, die schwer miteinander zu vereinbaren sind: Das Rundumsuchgerät soll ein großes Gesichtsfeld abtasten. Wenn diese Abtastung mit hoher Abtastrate erfolgt, steht nur wenig Zeit für die Beobachtung und Identifizierung eines Ziels zur Verfügung. Das erhöht die Falschalarmrate. Eine langsamere Abtastrate führt wiederum dazu, daß das Ziel nur in relativ langen Zeitabständen erfaßt wird.

Die DE 32 12 729 C2 beschreibt eine Einrichtung zur Zielrichtungs-Bestimmung mittels eines die Beobachtung aus dem geschlossenen Kampfpanzer heraus gestattenden Winkelspiegels. Die so ermittelte Richtung wird an ein vergrößerndes Sichtgerät für Kampfpanzer weitergegeben. Der Winkelspiegel beobachtet ein Gefechtsfeld. Wenn damit ein Ziel entdeckt wird, dann muß dieses Ziel mittels eines vergrößernden Sichtgerätes identifiziert werden. Dazu muß das Sichtgerät unter Verwendung der mit dem Winkelspiegel gewonnenen Richtungs-Information auf das Ziel ausgerichtet werden. Der Winkelspiegel wird dabei von dem Kommandanten des Kampfpanzers von Hand auf ein beobachtetes Ziel gerichtet. Zum Ausrichten des Sichtgerätes auf das Ziel ist im Ausblickfenster des Winkelspiegels eine senkrechte Visierlinie vorgesehen. Im Einblickfenster des Winkelspiegels sind Visierhilfen angebracht. Nach dieser Visierlinie und den Visierhilfen wir dann das Sichtgerät eingestellt. Die Visierhilfen bestehen bei einer Ausführung aus einer von Hand verschiebbaren Marke im Einblickfenster, welche so eingestellt wird, daß sie zusammen mit der Visierlinie die Richtung zum Ziel festlegt. Die Stellung der Marke wird abgegriffen und dient zur automatischen Ausrichtung des Sichtgerätes auf das Ziel. Bei einer anderen Ausführung bestehen die Visierhilfen aus festen Marken mit zugehörigen Tasten.

Durch die EP 0 402 601 A2 ist eine opto-elektronische Ausblick-Baugruppe zur Abbildung eines Gesichtsfeldes auf einem Monitor bekannt. Die Ausblick-Baugruppe weist ein Teleskop zur Erzeugung eines optischen Bildes des Gesichtsfeldes und eine Bildabtastvorrichtung auf. Das von der Bildabtastvorrichtung erfaßte Bild wird auf dem Monitor dargestellt. Um ein hinreichend großes Gesichtsfeld bei ausreichender Auflösung des Bildes durch das Teleskop zu ermöglichen, ist dem Teleskop ein Spiegelsystem vorgeschaltet.

Das Spiegelsystem schwenkt die Strahleinfalls-Richtung in Vertikal- und Horizontalrichtung. Das Spiegelsystem wird dabei schrittweise fortgeschaltet, so daß durch das Teleskop nacheinander aneinander angrenzende Bereiche des Gesichtsfeldes abgetastet werden.

Die GB 21 96 441 A beschreibt ein Abtastgerät, durch welche zwei Strahlenbündel zur Rasterabtastung einer Szene periodisch ablenkbar sind. Eine Abtastung der Szene erfolgt über ein Teleskop mit geringem Öffnungswinkel aber höherer Auflösung. Die andere Abtastung erfolgt mit einem größeren Öffnungswinkel. Die Anordnung kann auf ein durch die Abtastung mit größerem Öffnungswinkel erfaßtes Ziel so ausgerichtet werden, daß das Ziel im Gesichtsfeld des Teleskops liegt. Die letztere Abtastung erfolgt dann mit ausreichender Auflösung, um eine Identifizierung des Ziels zu ermöglichen.

Die GB 21 96 441 A zeigt somit ein optronisches Suchgerät enthaltend einen ersten Sucher für die Zieldetektion, durch welchen ein größeres, erstes Gesichtsfeld kontinuierlich abtastbar ist und einen zweiten Sucher zur Abtastung eines gegenüber dem ersten Gesichtsfeld begrenzten zweiten Gesichtsfeld zur Zielerkennung.

Es ist weiterhin bekannt, die Zielerkennungs-Leistung von Suchgeräten durch einen bildauflösenden, optronischen Sensor hoher Auflösung und durch längere Beobachtungszeiten zu verbessern. Dadurch können Struktur-Informationen der Ziele und Falschziele besser analysiert werden. Es ist auch möglich, charakteristische Bewegungsabläufe, z.B. die Rotorbewegung eines Hubschraubers, zu analysieren. Das widerspricht aber der Forderung nach einer schnellen Zielsuche in einem großen Bereich.

Der Erfindung liegt die Aufgabe zugrunde, bei einem Rundumsucher die Falschalarmrate zu verringern.

Der Erfindung liegt weiter die Aufgabe zugrunde, einen Rundumsucher mit kurzer Abtastzeit zu schaffen.

Der Erfindung liegt insbesondere die Aufgabe zugrunde, einen Rundumsucher zu schaffen, der
- eine hochaufgelöste Struktur- und Bewegungsanalyse eines Ziels oder Falschziels ermöglicht und gleichzeitig
- die Zielsuche in einem großen Suchbereich innerhalb kurzer Zeitabschnitte durchführt und weiterhin
- die Kosten durch optimale Ausnutzung des Detektors zu minimieren.

Erfindungsgemäß werden diese Aufgaben gelöst durch
(a) Speichermittel (92) zur Speicherung der Positionen der von dem ersten Sucher detektierten Ziele und
(b) Nachführmittel, die von den Speichermitteln gesteuert sind und durch welche der zweiten Sucher (36) unabhängig von der Ausrichtung des ersten Suchers schrittweise nacheinander auf die gespeicherten Positionen der detektierten Ziele ausrichtbar ist und in jeder dieser Positionen für eine Beobachtungszeit gehalten wird.

Bei dem Rundumsuchgerät nach der Erfindung werden die Funktionen der Abtastung des Gesamtbereiches, d.h. eines vorgegebenen, ausgedehnten Raumwinkels, und der Zielerkennung voneinander getrennt. Der erste Sucher tastet den Gesamtbereich schnell ab und bestimmt mögliche Zielpositionen. Der zweite Sucher wird schrittweise von einer der so bestimmten Zielpositionen zur nächsten verstellt. Der zweite Sucher bleibt auf jede dieser Zielpositionen für eine Zeitspanne ausgerichtet, die ausreicht, um die Struktur-Informationen des Ziels oder Falschziels sowie charakteristische Bewegungsabläufe zu analysieren.

Ausgestaltungen der Erfindung sind Gegenstand der Unteransprüche.

Ein Ausführungsbeispiel der Erfindung ist nachstehend unter Bezugnahme auf die zugehörige Zeichnung näher erläutert.

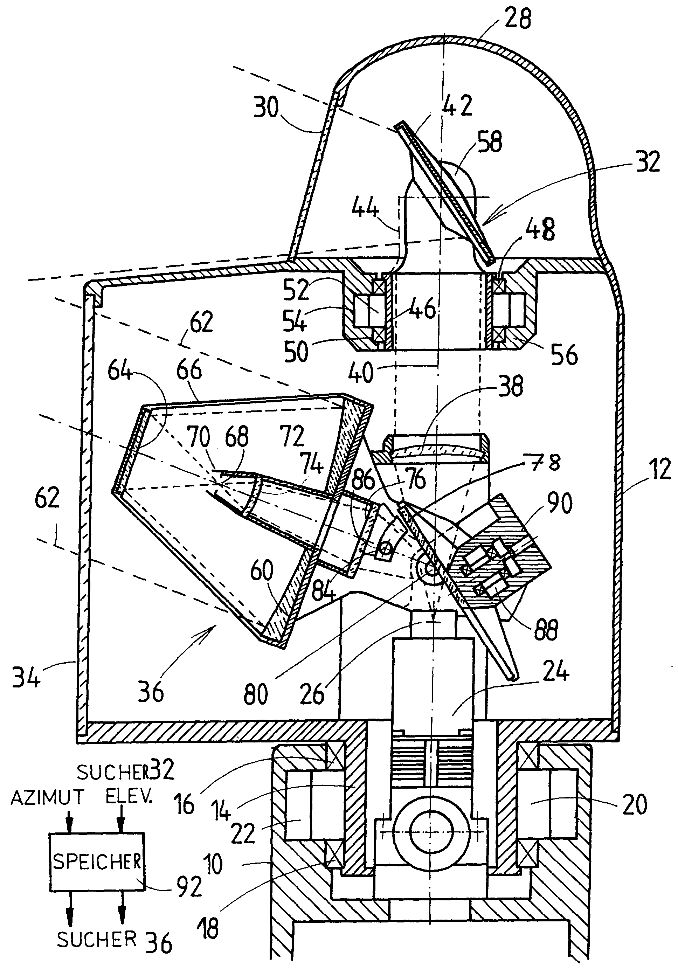

Die Zeichnung zeigt einen Längsschnitt eines Rundumsuchers.

Mit 10 ist ein Sockel bezeichnet. In dem Sockel 10 ist ein Gehäuse 12 drehbar gelagert. Das Gehäuse 12 weist zu diesem Zweck an seinem Boden einen rohrförmigen Ansatz 14 auf, der in Lagern 16 und 18 gelagert ist. Auf dem rohrförmigen Ansatz 14 sitzt der Rotor 20 eines Stellmotors. Der Stator 22 des Stellmotors ist in dem Sockel 10 gehaltert.

Durch den rohrförmigen Ansatz 14 hindurch ragt ein stillstehender Kühler 24, der einen Sensor 26 trägt.

Das Gehäuse 12 weist in einer Gehäusekuppel 28 ein erstes seitliches Fenster 30 auf. Durch das seitliche Fenster 30 hindurch ist ein zu überwachender Raumwinkelbereich mittels eines ersten Suchers 32 kontinuierlich abtastbar. Das Gehäuse 12 weist in einer Seitenwand ein zweites seitliches Fenster 34 auf. Durch das zweite seitliche Fenster 34 hindurch sind Zielpunkte in dem Raumwinkelbereich durch einen zweiten Sucher 36 beobachtbar.

Der erste Sucher 32 enthält ein abbildendes optisches System 38 in Form einer Linse. Die optische Achse 40 des Strahlenganges dieses abbildenden optischen Systems verläuft senkrecht in der Figur längs der Drehachse des Gehäuses 12 und des Stellmotors 20, 22. Der Strahlengang des ersten Suchers 32 verläuft über einen drehbaren Schwenkspiegel 42. Der Schwenkspiegel 42 ist im Strahlengang des ersten Suchers 32 angeordnet und lenkt diesen Strahlengang durch das seitliche Fenster 30 hindurch ab. Der Schwenkspiegel 42 ist in einer Halterung 44 gelagert. Die Halterung 44 ist mit einer Lagerhülse 46 in Kugellagern 48 und 50 drehbar gelagert. Die Lagerhülse 46 und die Kugellager 48, 50 sind koaxial zu der optischen Achse 40 des Strahlenganges des ersten Suchers 32. Auf der Lagerhülse 46 sitzt der Rotor 52 eines Antriebsmotors. Der Stator 54 des Antriebsmotors ist in einem nach innen eingezogenen Randteil 56 des Gehäuses 12 gehaltert. Der Randteil 56 umgibt einen Durchbruch des Gehäuses 12, durch den hindurch der Strahlengang des ersten Suchers 32 verläuft. An der Halterung 44 sitzt ein Schwenkantrieb 58, durch welchen der Schwenkspiegel 42 verschwenkbar ist. Durch einen kontinuierlichen Antrieb der Halterung 44 mit dem Schwenkspiegel 42 mittels des Antriebsmotors 52, 54 in Verbindung mit einer Verschwenkung des Schwenkspiegels 42 durch den Schwenkantrieb 58 kann der Strahlengang des ersten Suchers so ausgelenkt werden, daß er den beobachteten Raumwinkelbereich relativ schnell abtastet.

Der Strahlengang ist dabei auf dem Sensor 26 fokussiert.

Der zweite Sucher enthält einen ringförmigen Hohlspiegel 60, der Strahlung eines Ziels durch das Fenster 34 hindurch erfaßt, wie durch die Strahlen 62 angedeutet ist. Ein Planspiegel 64 ist über Streben 66 zentral gegenüber dem Hohlspiegel 60 angeordnet. Der Hohlspiegel 60 bildet ein Ziel oder eine Objektszene über den Planspiegel 64 in einer Bildebene 68 in einer Zwischenabbildung ab. In der Bildebene 68 ist eine Blende 70 angeordnet. Anschließend an die Blende 70 ist eine Abschirmung 72 vorgesehen. Im Strahlengang ist dann ein brechendes, abbildendes optisches System mit einer Linse 74 und einer Linse 76 vorgesehen. Das brechende, abbildende optische System erzeugt über einen umlaufenden Sektorspiegel 78 ein Bild des Ziels oder einer Objektszene in der Ebene des Sensors 26.

Zur Ausrichtung des zweiten Suchers 36 auf eine vorgegebene Zielposition ist das abbildende optische System um eine Achse 80 verschwenkbar, welche die optische Achse 40 senkrecht schneidet und die in der Ebene des Sektorspiegels 78 verläuft. Damit kann die Elevation eingestellt werden. Außerdem ist das gesamte Gehäuse 12 durch den Stellmotor 20, 22 um die vertikale optische Achse 40 verdrehbar. Damit kann das Azimut eingestellt werden. Damit bei der Verschwenkung des abbildenden optischen Systems 36 das Bild stets in der Ebene des Sensors 26 erzeugt wird, wird der Schwenkwinkel des abbildenden optischen Systems durch ein Ritzel 84 und einen Zahnkranz 86 abgegriffen. Der Sektorspiegel 78 wird dann über ein geeignetes (nicht dargestelltes) Getriebe um den halben Winkel ebenfalls um die Achse 80 verschwenkt.

Der Sektorspiegel 78 wird von einem Antriebsmotor 88 um eine Achse 90 angetrieben. Abwechselnd wird das Lichtbündel von dem ersten Sucher 32 zu dem Sensor 26 durchgelassen oder das Lichtbündel von dem zweiten Sucher 36 durch den Sektorspiegel 78 auf den Sensor 26 reflektiert.

Der erste Sucher 32 detektiert bei der schnellen, kontinuierlichen Abtastung des beobachteten Raumwinkels Zielpositionen von möglichen Zielen. Diese Zielpositionen werden in einem Speicher 92 gespeichert. Der zweite Sucher 36 wird nun nacheinander schrittweise auf diese gespeicherten Zielpositionen ausgerichtet. Dabei kann der zweite Sucher 32 von einer Zielposition zur anderen sehr schnell bewegt werden. In jeder Zielposition bleibt er für eine bestimmte Zeitdauer stehen. Diese Zeitdauer reicht aus, um die Struktur-Informationen des Ziels oder Falschziels sowie charakteristische Bewegungsabläufe zu analysieren.

Der Sensor 26 ist ein hochauflösender Matrix-Detektor. Wenn man z.B. annimmt, daß der Sensor 26 mit dem abbildenden optischen System ein Gesichtsfeld von 2° x 2° aufweist, dann müßten zur vollständigen Abtastung eines Raumwinkelbereiches der Größe 2 innerhalb der Suchzeit ca. 5 000 Abtastschritte gemacht werden. Wenn man weiterhin annimmt, daß der schnellabtastende erste Sensor 32 in diesem Raumwinkelbereich fünfzig Ziele und Falschziele angibt, die von dem zweiten Sensor 36 nacheinander identifiziert werden müssen, dann sind hierzu fünfzig Abtastschritte erforderlich, nämlich von einem dieser Ziele und Falschziele schrittweise zum nächsten. Das ergibt näherungsweise einen Zeitvorteil von einem Faktor 5 000/ 50 = 100. Eine Suchzeit von z.B. 15 Minuten kann dadurch auf etwa 10 Sekunden verkürzt werden. Das ist ein entscheidender Vorteil für Warnsensoren.

Bei der beschriebenen Anordnung wird ein einziger Sensor 26 mit einem Matrix-Detektor von 128 x 128 oder 256 x 256 Detektor-Elementen verwendet, der mit hoher Bildwiederholungsrate arbeitet. Der Matrix-Detektor wird wechselweise mit hoher Frequenz über den rotierenden Sektorspiegel 78 mit beiden Sucher-Strahlengängen beaufschlagt. Die Bildfrequenz von Matrix-Detektoren z.B. auf der Basis von CCD-Technologie liegt im Bereich von 100 bis 500 Hertz. Der erste Sucher (Punktzielsucher) 32 und der zweite Sucher (Stare-Step-Sucher) 36 können daher mit jeweils 50 bis 250 Hertz Bildfrequenz arbeiten. Dadurch sind schnell abtastende Systeme realisierbar.

## Patentansprüche

1. Optronisches Rundumsuchgerät enthaltend einen ersten Sucher für die Zieldetektion, durch welchen ein größeres, erstes Gesichtsfeld kontinuierlich abtastbar ist, einen zweiten Sucher zur Abtastung eines gegenüber dem ersten Gesichtsfeld begrenzten zweiten Gesichtsfelds zur Zielerkennung und einen hochauflösenden Sensor (26)
**gekennzeichnet durch**
(a) Speichermittel (92) zur Speicherung der Positionen der von dem ersten Sucher detektierten Ziele und
(b) Nachführmittel, die von den Speichermitteln gesteuert sind und durch welche der zweite Sucher (36) unabhängig von der Ausrichtung des ersten Suchers schrittweise nacheinander auf die gespeicherten Positionen der detektierten Ziele ausrichtbar ist und in jeder dieser Positionen für eine Beobachtungszeit gehalten wird.

2. Optronisches Rundumsuchgerät nach Anspruch 1, **dadurch gekennzeichnet, daß** für den ersten und den zweiten Sucher (32,36) ein gemeinsamer Sensor (26) vorgesehen ist und weiterhin Strahlenwechselmittel (78) vorgesehen sind, durch welche entweder der Strahlengang des ersten Suchers (32) oder der Strahlengang des zweiten Suchers (36) auf den Sensor (26) geleitet wird.

3. Optronisches Rundumsuchgerät nach Anspruch 2, **dadurch gekennzeichnet, daß** die Strahlenwechselmittel von einem umlaufenden Sektorspiegel (78) gebildet sind, durch welchen abwechselnd der Strahlengang des ersten Suchers (32) zu dem Sensor (26) durchgelassen oder der Strahlengang des zweiten Suchers (36) auf den Sensor (26) reflektiert wird.

4. Optronisches Rundumsuchgerät nach Anspruch 3, **dadurch gekennzeichnet, daß** das abbildende optische System des zweiten Suchers (36) zur Ausrichtung auf ein Ziel durch Stellmittel als Ganzes in der Elevation verschwenkbar ist und der Sektorspiegel (78) mit den Stellmitteln zur Verschwenkung um den halben Schwenkwinkel des optischen Systems gekoppelt ist.

5. Optronisches Rundumsuchgerät nach Anspruch 4, **gekennzeichnet durch**
- ein um die gemeinsame Achse (40) der Strahlengänge des ersten und des zweiten Suchers (32,36) drehbares Gehäuse (12), in welchem das optische System des zweiten Suchers (36) in der Elevation verstellbar gelagert ist, und in welchem auch der Sektorspiegel (78) verschwenkbar angeordnet ist, und
- ein zweites um die optische Achse (40) der Sucher (32,36) drehbar an dem Gehäuse (12) gelagertes Teil (44), in welchem ein Spiegel (42), über den der Strahlengang des ersten Suchers (32) verläuft, in der Elevation verschwenkbar angeordnet ist.

## Revendications

1. Appareil de recherche panoramique optronique comprenant un premier chercheur de détection d'une cible par lequel un premier champ de vision d'une certaine grandeur est susceptible d'être exploré en continu, un second chercheur destiné à explorer un second champ de vision limité par rapport au premier champ de vision et à reconnaître une cible, et un capteur à haute résolution (26),
**caractérisé par**
(a) des moyens de mémorisation (92) destinés à mémoriser les positions des cibles détectées par le premier chercheur et
(b) des moyens de poursuite commandés par les moyens de mémorisation et par lesquels le second chercheur (36) est susceptible d'être orienté successivement progressivement sur les positions mémorisées des cibles détectées indépendamment de l'orientation du premier chercheur et par lesquels il est maintenu dans chacune de ces positions pour une durée d'observation.

2. Appareil de recherche panoramique optronique selon la revendication 1, **caractérisé par le fait qu'**un capteur commun (26) est prévu pour le premier et le second chercheur (32,36) et que des moyens de changement de rayons (78) sont en outre prévus, moyens par lesquels soit la marche des rayons du premier chercheur (32), soit la marche des rayons du second chercheur (36) est déviée sur le capteur (26).

3. Appareil de recherche panoramique optronique selon la revendication 2, **caractérisé par le fait que** les moyens de changement de rayons sont formés d'un miroir à secteurs rotatif (78) par lequel, soit la marche des rayons du premier chercheur (32) est transmise au capteur (26), soit la marche des rayons du second chercheur (36) est réfléchie sur le capteur (26).

4. Appareil de recherche panoramique optronique selon la revendication 3, **caractérisé par le fait que** le système optique reproducteur du second chercheur (36) est susceptible d'être pivoté dans son ensemble en élévation par des moyens de réglage en vue de l'orientation sur une cible et que le miroir à secteurs (78) est couplé avec les moyens de réglage en vue d'un pivotement autour du demi-angle de pivotement du système optique.

5. Appareil de recherche panoramique optronique selon la revendication 4, **caractérisé par**
- un boîtier (12) susceptible de tourner autour de l'axe commun (40) des marches des rayons du premier et du second chercheur (32,36), boîtier dans lequel le système optique du second chercheur (36) est logé de façon susceptible à être déplacé en élévation, et dans lequel le miroir à secteurs (78) est également disposé de façon susceptible à être pivoté, et
- un second élément (44) logé au boîtier (12) de façon susceptible à tourner autour de l'axe optique (40) des chercheurs (32,36), élément dans lequel un miroir (42), que la marche des rayons du premier chercheur (32) traverse, est disposé de façon susceptible à être pivoté en élévation.

## Claims

1. Optronic all-around seeker device comprising a first seeker for detecting a target, this seeker being adapted to continuously scan an extended, first field of view, a second seeker for scanning a second field of view limited relative to the first field of view, and a high-resolution sensor (26)
**characterized by**
(a) memory means (92) for storing the positions of the targets detected by the first seeker, and
(b) follow-up means which are controlled by the memory means and which are arranged to align the second seeker (36), independently of the orientation of the first seeker, stepwise, consecutively with the stored positions of the detected targets and to retain it in each of these positions for an observation time.

2. Optronic all-around seeker device as claimed in claim 1, **characterized in that** a common sensor (26) is provided for the first and second seekers (32,36) and, furthermore, beam changing means (78) are provided, by which either the path of rays of the first seeker (32) or the path of rays of the second seeker (36) is directed to the sensor (26).

3. Optronic all-around seeker device as claimed in claim 2, **characterized in that** the beam changing means are a rotating sector mirror (78) by which alternatingly the path of rays of the first seeker (32) is passed to the sensor (26) or the path of rays of the second sensor (36) is reflected onto the sensor.

4. Optronic all-around seeker device as claimed in claim 3, **characterized in that** the imaging optical system of the second seeker (36) is arranged to be tilted as a whole for the alignment with a target, and the sector mirror (78) is coupled with the atuator means to be tilted about half of the tilting angle of the optical system.

5. Optronic all-around seeker device as claimed in claim 4, **characterized by**
- a housing (12) rotatable about a common axis (40) of the paths of rays of the first and second seekers (32,36), the optical system of the second seeker (36) being mounted for elevational movement in the housing, also the sector mirror (78) being tiltably arranged therein,
- a second part (44) rotatably mounted at the housing (12) about the optical axis (40) of the seekers (32,36), a mirror via which the path of rays of the first seeker (32) is directed, being alevationally tiltably mounted in this part.
